# EUROPÄISCHE PATENTSCHRIFT

(11) **EP 1 600 337 B1**
(45) Veröffentlichungstag und Bekanntmachung des Hinweises auf die Patenterteilung: **12.12.2007**
(21) Anmeldenummer: 04012787.0
(22) Anmeldetag: 28.05.2004
(51) Int. Cl.: B60R 21/017, H02H 3/087, H02J 7/00

(54) **Elektronischer Batterieschutzschalter**
Electronic circuit breaker for battery
Coupe-circuit électronique pour batterie

(43) Veröffentlichungstag der Anmeldung: 30.11.2005
(73) Patentinhaber: catem DEVELEC GmbH, 76863 Herxheim (DE)
(72) Erfinder: Uhl, Günter, Dr.-Ing., 74921 Helmstadt-Bargen (DE)
(74) Vertreter: Grünecker, Kinkeldey, Stockmair & Schwanhäusser Anwaltssozietät

(56) Entgegenhaltungen:
- EP-A- 1 216 889
- DE-C- 19 825 245
- DE-U- 20 005 012
- US-A- 5 926 010
- US-A1- 2002 014 943

## Beschreibung

Die Erfindung betrifft einen verbesserten Batterieschutzschalter für Kraftfahrzeuge.

Ein Batterieschutzschalter ist in Kraftfahrzeugen zwischen die Batterie und das Kraftfahrzeugbordnetz geschaltet. Bei einem Unfall trennt der Batterieschutzschalter die Batterie von dem Kraftfahrzeugbordnetz, um zu verhindern, dass durch auslaufenden Kraftstoff und einen elektrischer Kurzschluss einen Brand oder eine Explosion verursacht wird. Besonders groß ist die Gefahr eines Kurzschlusses bei solchen Kraftfahrzeugen, die eine im Fahrzeugheck angeordnete Batterie aufweisen. Bei diesen Fahrzeugen befinden sich im Fahrzeugboden zwischen Motorraum und Heck PLUS-Leitungen mit großen Querschnitten. Die großen Querschnitte haben entsprechend hohe Kurzschlussströme bei einem Unfall zur Folge.

Herkömmliche Batterieschutzschalter ermöglichen eine abrupte Trennung des Kraftfahrzeugbordnetzes von der Batterie über einen elektromagnetisch oder pyrotechnisch geöffneten Kontakt. Sobald ein von außen zugeführtes Auslösesignal anliegt, wird der normalerweise geschlossene Kontakt durch Zünden der pyrotechnischen Ladung oder elektromagnetisch geöffnet. Das von außen zugeführte Unfall- bzw. "Crash"-Signal wird im Allgemeinen dem Airbag-System des Kraftfahrzeugs entnommen. Sobald die Airbags auslösen, erfolgt auch ein sofortiges Abtrennen der Batterie. Ein solcher elektromagnetisch betätigter Batterieschutzschalter ist beispielsweise aus DE-C1-198 25 245 bekannt.

Nachteilig an herkömmlichen Batterieschutzschaltern ist, dass eine Abtrennung der Batterie bei solchen Unfallszenarien nicht erfolgt, bei denen das Airbag-System nicht aktiviert wird. Insbesondere bei einem schrägen Auffahren eines Kraftfahrzeugs auf eine Leitplanke erzeugen Crash-Sensoren kein Unfall-Signal. Besonders starke Verzögerungen treten bei diesem Szenario nicht auf, so dass der Crash-Sensor des Airbag-Systems nicht anspricht. Bei einem solchen Unfall werden jedoch die Hochstrom-Leitungen im Bodenblech des Kraftfahrzeugs durchgescheuert.

Herkömmliche Batterieschutzschalter, insbesondere solche, die auf pyrotechnischer Basis arbeiten, trennen die Batterie irreversibel vom Kraftfahrzeugbordnetz. Nach dem Auslösen des Batterieschutzschalters ist das Kraftfahrzeug auch bei einem Unfall ohne größere Folgeschäden zunächst nicht mehr fahrbereit. Erst nach einem Austausch des Batterieschutzschalters kann das Kraftfahrzeug aus eigener Kraft weiterbewegt werden.

Elektromagnetisch betriebene Batterieschutzschalter sind zwar nach einem leichten Unfall, der keine größeren Schäden zur Folge hat, wieder rücksetzbar. Aufgrund von Verschleiß der elektromechanischen Kontakte beim Schalten hoher Ströme erlauben diese Schutzschalter jedoch nur eine sehr begrenzte Anzahl von Schaltungen, im Regelfall nur maximal 10 bis 50 Schaltvorgänge. Ein Abtrennen der Batterie über diese Batterieschutzschalter kommt daher nur in Ausnahmefällen in Betracht.

EP-A-1 216 889, das die Merkmale des Oberbegriffs des Anspruchs 1 zeigt, beschreibt einen MOSFET als Trennschalter zwischen Batterie und Kraftfahrzeugbordnetz. Mögliche Ereignisse, die eine Trennung zwischen Batterie und Kraftfahrzeug auslösen können, sind ein Crashsignal, Feuer, Überstrom oder Neigung um mehr als einen bestimmten Winkel.

Aufgabe der Erfindung ist es, einen verbesserten Batterieschutzschalter anzugeben.

Diese Aufgabe wird mit den Merkmalen des unabhängigen Patentanspruchs gelöst.

Der erfindungsgemäße Batterieschutzschalter dient zur Trennung einer elektrischen Verbindung zwischen der Batterie eines Kraftfahrzeugs und einem Kraftfahrzeugbordnetz. Der Batterieschutzschalter umfasst einen Halbleiterschalter zur Verbindung und Trennung der Batterie und des Kraftfahrzeugbordnetzes in Abhängigkeit von einem Überstrom und/oder einem Crash-Signal.

Die vorliegende Erfindung verwendet in einem Batterieschutzschalter einen Halbleiterschalter zur elektrischen Verbindung oder Trennung von Batterie und Bordnetz. Im Gegensatz zu elektromechanisch betätigten Schaltkontakten ermöglicht ein Halbleiterschalter eine unbegrenzte Anzahl von Schaltzyklen. Zudem ist ein Halbleiterschalter in einfacher Weise wieder rücksetzbar. Bei dem erfindungsgemäßen Batterieschutzschalter muss eine Abschaltung daher nicht mehr wie herkömmlich auf außergewöhnliche Notfälle beschränkt werden.

Es ist der besondere Ansatz der vorliegenden Erfindung, den Halbleiterschalter für einen bidirektionalen Betrieb des Stroms von und zu der Batterie auszulegen. Der Halbleiterschalter kann daher sowohl einen in als auch aus der Batterie fließenden Strom schalten. Dabei geht der Halbleiterschalter vorzugsweise in den bidirektionalen Betrieb über, wenn die Spannung des Bordnetzes größer als Null, insbesondere größer als die Batteriespannung ist.

Gemäß einer bevorzugten Ausführungsform der Erfindung wird der Halbleiterschalter des Batterieschutzschalters nicht nur für eine Not-Abschaltung verwendet, sondern auch, um das Kraftfahrzeugbordnetz regelmäßig in der Stellung "Zündung AUS" von der Batterie zu trennen. Diese Trennung wird herkömmlich von einem sogenannten "Klemme-15-Schalter" bewerkstelligt. Der Klemme-15-Schalter ist ein Kontakt im Zündschloss, der bei Einschalten der Zündung geschlossen wird. Weil ein solcher Zündschlossschalter jedoch nicht in der Lage ist, hohe Ströme zu schalten, wird in zunehmendem Maße ein zusätzliches Relais zu diesem Zweck eingesetzt, das beim Einschalten der Zündung aktiviert wird. Ein solches Relais als Klemme-15-Schalter wird im Allgemeinen nicht zum Abtrennen von Verbrauchern verwendet, die hohe Ströme benötigen. Im Gegensatz dazu übernimmt der erfindungsgemäße Batterieschutzschalter auch die Funktion des bisherigen Klemme-15-Schalters, da er eine unbegrenzte Anzahl von Schaltzyklen und eine problemlose Schaltung auch hoher Ströme ermöglicht.

Im Vergleich zu herkömmlichen Klemme-15-Schaltern weist der erfindungsgemäße Batterieschutzschalter eine höhere Stromtragfähigkeit auf. Die Erfindung ermöglicht deshalb, auch solche Verbraucher in der Stellung Zündung AUS vom Bordnetz zu trennen, die herkömmlich dauerhaft mit dem Kraftfahrzeugbordnetz verbunden sind. Insbesondere Verbraucher mit sehr hohen Betriebsströmen wie elektrische Zusatzheizungen, beispielsweise PTC-Heizungen, und Glühsysteme wurden bisher nicht von dem Klemme-15-Schalter vom Bordnetz getrennt. Weitere Beispiele für Verbraucher, die bei ausgeschalteter Zündung nicht vom Bordnetz getrennt werden, sind die Heckscheibenheizung, eine Sitzheizung und Gebläseregler für die Motorkühlung und das Innenraumgebläse. Gemäß dieser bevorzugten Ausführungsform der Erfindung können die Problem behoben werden, die sich aus dem möglichen hohen Ruhestromverbrauch von herkömmlich permanent mit der Batterie verbundener Fahrzeugkomponenten ergeben.

Außerdem ermöglicht diese vorteilhafte Ausführungsform eine erhöhte Sicherheit. Erfindungsgemäß trennt der Batterieschutzschalter auch solche Verbraucher von der Batterie, die herkömmlich permanent mit der Batterie verbunden waren. Insbesondere wurden herkömmlich elektrische Zusatzheizungen nicht von der Batterie getrennt. Elektrische Zusatzheizung sind zunehmend mit einer Leistungselektronik-Steuerung ausgestattet. Das Durchlegieren einer Leistungselektronik-Endstufe kann einen dauernden Betrieb der entsprechenden Heizstufe und damit dauerhaften Stromfluss und ein Entleeren der Batterie zur Folge haben. Erfindungsgemäß wird dieses Problem in einfacher und zuverlässiger Weise gelöst.

Ein ähnliches Problem entsteht auch bei Innenraum-Gebläsereglern, bei denen ebenfalls kritische Betriebszustände auftreten, wenn der hochbelastete Transistor des Linearreglers durchlegiert / überhitzt und einen dauernden Stromfluss zur Folge hat. Dieser Stromfluß kann ebenfalls mit Hilfe des erfindungsgemäßen Batterieschutzschalters verhindert werden.

Gemäß einer weiteren vorteilhaften Ausführungsform der Erfindung ist der Batterieschutzschalter mit einer Strommessfunktion zur Überwachung des aus der Batterie in das Kraftfahrzeugbordnetz fließenden Stroms ausgestattet. Eine solche, rein elektronisch realisierte, integrierte Überstrom- und Kurzschlussabschaltung ermöglicht ein deutlich schnelleres Trennen von Batterie und Bordnetz im Fehlerfall. Aufgrund der vollständig elektronischen Realisierung von Überwachung und Abschaltung sind herkömmlich relevante Ansprech- und Schaltverzögerungen vernachlässigbar. Das Erkennen einer Überstrombedingung und ein daraufhin erfolgtes Abtrennen des Bordnetzes von der Batterie kann im Vergleich zu einer Realisierung mit einem elektromechanischen Schalter in weniger als 100 µs erfolgen.

Vorzugsweise umfasst der Batterieschutzschalter, der mit einer in den Halbleiterschalter integrierten Strommessfunktion ausgestattet ist, außerdem eine Steuereinrichtung zur Auswertung des gemessenen Stroms und zur Ansteuerung des Halbleiterschalters zur Trennung der elektrischen Verbindung zwischen der Batterie und dem Kraftfahrzeugbordnetz. Gegenüber einer Lösung mit einem herkömmlich elektromagnetisch betätigten Schaltkontakt mit stromabhängiger Auslösung bietet ein elektronischer Schalter mit integrierter Strommessung den Vorteil eines deutlich verringerten Schaltungsaufwandes und ist somit günstigerer Herstellung.

Für die entsprechende Realisierung eines-elektromagnetisch betätigten Schaltkontakts ist zusätzlich zu dem elektromagnetisch betätigten Schalter ein Mess-Shunt zur Strommessung, eine Messaufbereitung (beispielsweise über einen Operationsverstärker) und ein Mikrocontroller zur Stromauswertung und Relaisansteuerung erforderlich. Eine Realisierung mit einem Halbleiterschalter, der eine integrierte Strommessung aufweist, ist außer dem Halbleiterschalter nur eine Steuereinrichtung zur Stromauswertung und Ansteuerung des Halbleiterschalters erforderlich.

Eine rein elektronisch realisierte Überstrom- bzw. Kurzschlussabschaltung ermöglicht ein deutlich schnelleres Abschalten. Die erfindungsgemäß rein elektronisch realisierte Schutzabschaltung weist im Gegensatz zu herkömmlichen Schutzschaltern vernachlässigbare Ansprech- und Schaltverzögerungen auf. Das Erkennen einer Überstrombedingung und das darauf erfolgende Abschalten des Bordnetzes kann im Vergleich zu einer Realisierung mit einem elektromechanischen Schalter in wenigen 100 µs erfolgen. Zum Zeitpunkt des Abschaltens des Lastkreises fließt ein geringer Strom aufgrund der endlichen Stromanstiegsgeschwindigkeit, bewirkt durch die Induktivität des Lastkreises (Lichtbogenbildung, Kontaktbelastung usw.).

Die Steuereinrichtung vergleicht den gemessenen Stromwert vorzugsweise mit einem vorgegebenen Grenzwert. Dieser Grenzwert ist gemäß einer weiter bevorzugten Ausgestaltung adaptiv einstellbar. Auf diese Weise kann sich die Schutzabschaltung an verschiedene Betriebszustände des Kraftfahrzeugs variabel anpassen. Nur kurzzeitig auftretende hohe Ströme können toleriert werden. Außerdem kann der Startvorgang des Motors, bei dem hohe Ströme über das Bordnetz aus der Batterie zum Starter fließen, sicher erkannt und toleriert werden.

Vorzugsweise signalisiert die Steuereinrichtung dem Halbleiterschalter eine Überstromsituation, sobald der gemessene Strom den Grenzwert überschreitet.

Das Crash-Signal ist vorzugsweise ein Airbag-Auslösesignal. Auf diese Weise lässt sich sehr einfach ein Unfall ohne zusätzlichen Aufwand detektieren.

Vorzugsweise ist der Batterieschutzschalter zur Befestigung an einem Anschluss der Batterie ausgestaltet. Die Abschaltung der Stromzufuhr zu dem Bordnetz kann damit nahe an der Batterie erfolgen und Kurzschlüsse sicher verhindert werden.

Gemäß einer bevorzugten Ausführung ist in den Batterieschutzschalter eine Batterieüberwachungsfunktion integriert. Die Überwachungsfunktion überwacht vorzugsweise die Spannung, die Temperatur und den in oder aus der Batterie fließenden Strom. Mit diesen Parametern kann die Steuereinrichtung in einfacher Weise den Batteriezustand, insbesondere einen SOC- und SOH-Zustand ermitteln.

Gemäß einer weiteren bevorzugten Ausführungsform überwacht der Batterieschutzschalter die Ruhestromaufnahme des Kraftfahrzeug-Bordnetzes in der Stellung "Zündung AUS". Durch Auswertung des gemessenen Ruhestroms kann ein unzulässig hoher Ruhestrom und damit ein Entleeren der Batterie rechtzeitig erkannt und verhindert werden. Zu diesem Zweck werden vorzugsweise die auch in der Stellung "Zündung AUS" an die Batterie angeschlossenen Verbraucher von der Batterie getrennt, wenn der Ruhestrom aus der Batterie einen vorgegebenen Grenzwert überschreitet.

Vorzugsweise ist der Halbleiterschalter ein MOSFET.

Weiter bevorzugte Ausführungsformen sind Gegenstand der Unteransprüche.

Im Folgenden wird die vorliegende Erfindung anhand bevorzugter Ausführungsformen in Zusammenhang mit den beiliegenden Zeichnungen erläutert. Dabei zeigen die Zeichnungen im Einzelnen:
- Fig. 1: den Aufbau eines Kraftfahrzeugbordnetzes mit einem herkömmlichen Batterieschutzschalter,
- Fig. 2: ein Kraftfahrzeugbordnetz mit einem elektronischen Batterieschutzschalter gemäß der vorliegenden Erfindung, und
- Fig. 3: ein Kraftfahrzeugbordnetz gemäß Fig. 2 mit einer alternativen Ausführungsform zur Abschaltung von ständig aktiven Verbrauchern.

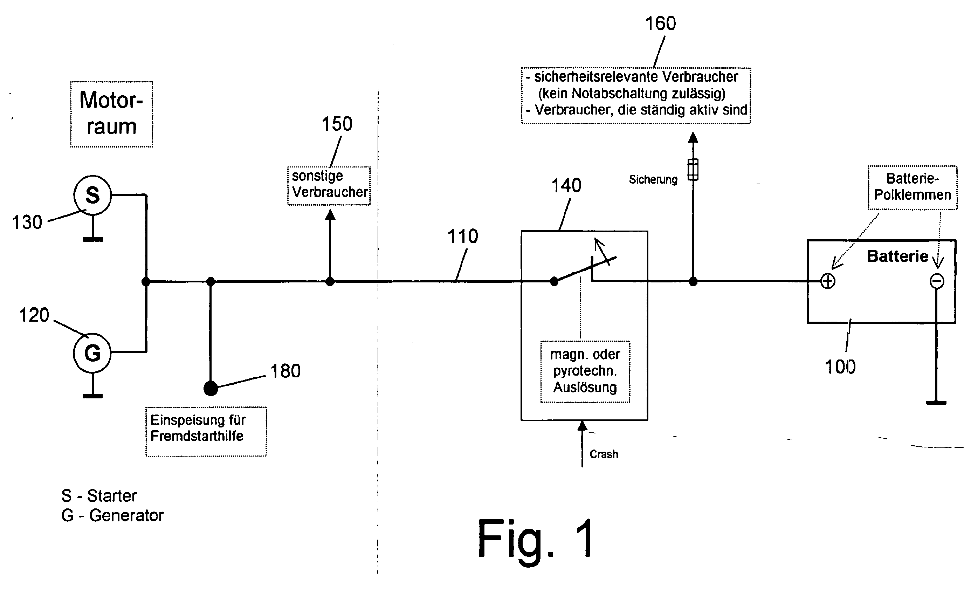

Fig. 1 zeigt in schematischer Weise den Aufbau eines herkömmlichen Kraftfahrzeugbordnetzes. Die Batterie 100 ist über einen Batterieschutzschalter 140 mit dem Kraftfahrzeugbordnetz 110 verbunden. An das Kraftfahrzeugbordnetz 110 sind ein Generator 120, ein Starter 130 und weitere Verbraucher 150 angeschlossen. Ein zusätzlicher Anschluss 180 ist für die Stromeinspeisung bei Fremdstarthilfe vorgesehen.

Während der Generator 120 beim Betrieb des Kraftfahrzeugmotors elektrischen Strom dem Kraftfahrzeugbordnetz 110 zuführt, speichert die Batterie 100 während des Betriebs des Motors die von dem Generator 120 bereitgestellte Energie. Um den Motor beim Anlassen in Betrieb zu setzen, wird über eine chemische Reaktion in der Batterie 100 elektrische Energie erzeugt und dem Starter 130 zugeführt.

Der Batterieschutzschalter 140 wird bei Vorliegen eines Überstromsignals oder eines Crash-Signals aktiv ausgeschaltet. Das heißt, dass bei Vorliegen eines Auslösesignals der Schalter entweder pyrotechnisch oder elektromagnetisch geöffnet wird, so dass das Bordnetz 110 von der Batterie 100 getrennt wird.

Sicherheitsrelevante Verbraucher 160, bei denen keine Notabschaltung zulässig ist, oder die ständig aktiv sein müssen, werden von der Notabschaltung ausgeschlossen. Zu diesem Zweck sind sie unter Umgehung des Batterieschutzschalters 140 mit der Batterie verbunden.

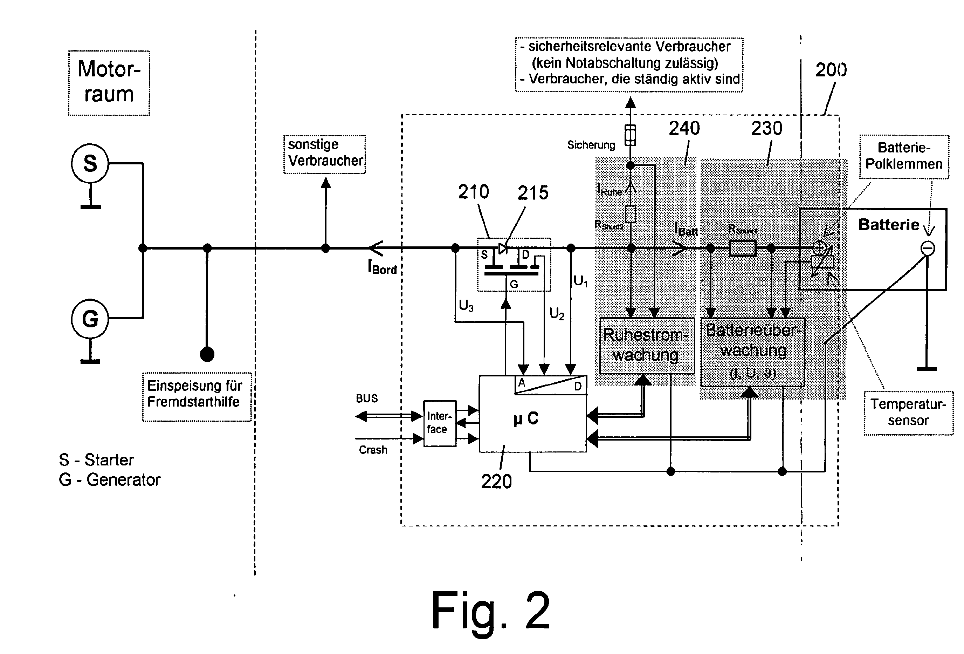

Ein elektronischer Batterieschutzschalter gemäß der vorliegenden Erfindung ist in Fig. 2 wiedergegeben. Anstelle des herkömmlichen Batterieschutzschalters 140 gemäß Fig. 1 wird erfindungsgemäß ein elektronischer Batterieschutzschalter 200 verwendet. Der Batterieschutzschalter der vorliegenden Erfindung umfasst als zentrales Element einen Hochstrom-Halbleiterschalter 210. Dieser Halbleiterschalter ist vorzugsweise ein MOSFET.

Der Strom von und zu der Batterie wird von dem Halbleiterschalter 210 gemäß der Ansteuerung durch die Steuereinrichtung 220 geschaltet. In Abhängigkeit von einem extern zugeführten Crash Signal oder einer über die Batterieüberwachung festgestellte Überstromsituation unterbricht der Halbleiterschalter 210 schlagartig die elektrische Verbindung zwischen der Batterie und dem Kraftfahrzeugbordnetz.

Zur Überwachung des in und aus der Batterie fließenden Stroms ist der Halbleiterschalter mit einer integrierten Strommessfunktion ausgestattet. Ein solcher Halbleiterschalter ist beispielsweise als "Smart Highside High Current Power Switch" BTS 555 von der Firma INFINEON erhältlich. Zur Schaltung sehr hoher Ströme werden in der Regel mehrere dieser Halbleiterschalter, im Allgemeinen 2 bis 4, parallel geschaltet.

Der Halbleiterschalter 210 wird im bidirektionalen Betrieb - bezogen auf die Richtung des Stromflusses - betrieben. Der Strom fließt nicht nur von Drain D zur Source S, sondern auch in der umgekehrten Richtung von S nach D. Obwohl ein solcher bidirektionaler Betrieb wegen des symmetrischen Aufbaus eines MOSFETs grundsätzlich zulässig ist, muss bei diesem Betrieb gewährleistet sein, dass der MOSFET im Inversbetrieb, d.h. beim Stromfluss von S nach D, so angesteuert ist, dass die D-S-Strecke leitend ist. Dazu ist die Spannung am Gate-Anschluss G höher als die Spannung an D und S. Damit wird verhindert, dass der invers fließende Strom durch die interne Body-Diode 115 fließt. Ein solcher Strom würde aufgrund des erhöhten Spannungsabfalls zu einer thermischen Beschädigung des MOSFETs führen, da die Durchlassspannung einer Diode im Allgemeinen bei etwa 1,2 V liegt. Im durchgesteuerten Zustand fallen über die D-S-Strecke unabhängig von der Stromrichtung nur wenige 100 mV ab.

Beim Inversbetrieb des MOSFET ist die Spannung am Source-Anschluß S größer als am Drain-Anschluß D, so dass es aufgrund der internen, immanenten Body-Diode zu einem Stromfluß kommt. Die hohe Durchlassspannung einer Diode mit U_{D} von ca. 1 V führt bei entsprechend hohen Strömen zu einer unzulässig hohen Verlustleistung und entsprechend starken Erwärmung. Die Verlustleistung liegt bei einem Strom von 100 A bei etwa 100 W. Im Normalbetrieb dagegen wird die Verlustleistung durch den Einschaltwiderstand des MOSFET R_{DSon} bestimmt. Dieser Widerstand liegt im Bereich von etwa 1 mΩ, so dass die Verlustleistung nur einen Wert von etwa 10 W erreicht. Es ist deshalb besonders wichtig, einen MOSFET im Inversbetrieb anzusteuern, damit der Strom "invers" über die leitende Drain-Source-Strecke und nicht durch die Body-Diode des MOSFET fließt.

Der Halbleiterschalter ist gemäß einer bevorzugten Ausführungsform für einen bidirektionalen Betrieb des Stroms von und zu der Batterie ausgelegt (Normalbetrieb bzw. Inversbetrieb). Der Halbleiterschalter kann daher sowohl einen in als auch aus der Batterie fließenden Strom führen. Nur im Normalbetrieb kann der Stromfluß durch den Halbleiterschalter unterbrochen werden. Dabei geht der Halbleiterschalter vorzugsweise in den inversen Betrieb über, wenn die Spannung des Bordnetzes größer als Null, insbesondere größer als die Batteriespannung ist.

Im Normalbetrieb fließt der Strom I_{Bord} über den Halbleiterschalter 210 in das Kraftfahrzeugbordnetz. Dieser Strom wird durch die in den Halbleiterschalter integrierte Strommessfunktion ständig überwacht und steht als Messspannung U₂ der Steuereinheit-220 zur-Verfügung. Normalbetrieb heißt in diesem Zusammenhang, dass die Zündung eingeschaltet wurde und der Halbleiterschalter 210 in der Folge von der Steuereinheit 220 durch ein über einen Datenbus erhaltenes Steuersignal eingeschaltet wird. Zu diesem Zeitpunkt liefert der Generator 120 noch keine Leistung und der Strombedarf des Kraftfahrzeugbordnetzes 110 einschließlich des Stroms für den Starter 130 wird ausschließlich von der Fahrzeugbatterie 100 gedeckt.

Nach dem Starten des Kraftfahrzeugmotors mit Hilfe des Starters 130 beginnt der Generator 120 Strom zu erzeugen. Der Strombedarf des Kraftfahrzeugbordnetzes wird von nun an durch den Generator gedeckt. Gleichzeitig wird die Batterie über den von dem Generator erzeugten Strom geladen. Mit Beginn der Stromerzeugung durch den Generator 120 ändert der durch den Halbleiterschalter 210 fließende Strom seine Richtung. Der Halbleiterschalter befindet sich nun im Inversbetrieb.

Auch bei nicht aktiviertem, d.h. leitend geschaltetem Halbleiterschalter muss ein beabsichtigter Inversbetrieb zuverlässig erkannt werden, nämlich für den Fall, dass als Fremdstarthilfe der Strom von einem anderen Kraftfahrzeug oder einer externen Starthilfebatterie am Einspeisepunkt 180 bei nicht eingeschalteter Zündung zugeführt wird. Im Normalbetrieb wird dagegen die Spannung vom Plus-Pol der Batterie in umgekehrter Richtung dem Starter zugeführt.

Zur sicheren Erkennung dieses Inversbetriebs wird die Spannung U₃, d.h. die Bordnetzspannung, überwacht. Diese ist im nicht-aktiven Zustand (Zündung AUS) Null. Wird die Bordnetzspannung U₃ jedoch größer als Null, insbesondere größer als die Batteriespannung U₁, wird der Halbleiterschalter 210 so angesteuert, dass die D-S-Strecke leitend und ein Stromfluss in beide Richtungen möglich wird.

Die Stromüberwachung erfolgt vorzugsweise nicht einfach durch Überwachen eines festen Grenzwertes, oberhalb dessen die Stromzufuhr von der Batterie automatisch unterbrochen wird. Durch eine dynamische Anpassung der Stromgrenzwerte bzw. Stromgrenzwertkurven kann die Überstromerfassung an unterschiedliche Fahrzeug-Betriebszustände angepasst werden. Damit kann z.B. ein Startvorgang von einem Kurschluss unterschieden werden. Zu dem Zweck dient ein ganz spezifisches Stromprofil während des Startvorgangs als Grenzkurve. Ein solches Stromprofil für den Startvorgang erlaubt kurze Stromspitzen von bis zu 1000 Ampere (beispielsweise durch Losreißen des Rotors des Starters verursacht) und bewirkt kein Abschalten des Batterieschutzschalters.

Nach dem erfolgreichen Start des Kraftfahrzeugmotors wird der Grenzwert zur Erkennung eines Kurzschlusses jedoch auf einen Wert von beispielsweise 100 Ampere abgesenkt. Ein Strom in der Größenordnung von 1000 Ampere wird dann als Kurzschluss erkannt und der Halbleiterschalter entsprechend geöffnet.

Das Abschalten der Stromzufuhr aus der Batterie in das Kraftfahrzeugbordnetz durch den Halbleiterschalter erfolgt erfindungsgemäß bei Vorliegen einer der folgenden Bedingungen:
a) Zündung AUS
b) Erkennen eines Kurzschlusses, d.h. von Überstrom, und
c) Vorliegen eines externen Crash-Signals.

In diesen Fällen wird davon ausgegangen, dass der Verbrennungsmotor steht oder abgeschaltet worden ist und der Generator selbst keinen Strom mehr erzeugt.

Die Steuerung aller Funktionen des elektronischen Halbleiterschalters erfolgt durch die Steuereinheit 220, die einen integrierten Analog/Digital-Wandler umfasst. Zu ihren Funktionen zählen das Messen der Spannungen U₁, U₂, U₃ und weiterer Größen, Bewerten der gemessenen Größen, Ansteuern des Halbleiterschalters und Verarbeiten der Signale für eine Überwachung der Ruhestromaufnahme des Kraftfahrzeug-Bordnetzes.

Die Steuereinrichtung 220 ist über ein Interface mit einem Fahrzeug-Busnetz verbunden, beispielsweise einem CAN- oder einem LIN-Bus. Über diesen Bus werden der Steuereinheit 220 externe Steuersignale zugeführt, beispielsweise das Signal Zündung AUS. Auch ein Crash-Signal kann über diesen Bus übertragen werden. Alternativ kann das Crash-Signal auch separat der Steuereinrichtung 220 zugeführt werden. Ein direkt (unter Umgehung des Datenbusses) zugeführtes Crash-Signal ist keiner Verzögerung durch den Datenbus unterworfen und bewirkt ein sicheres und sofortiges Abschalten des Halbleiterschalters 210.

Gemäß einer bevorzugten Ausführungsform der vorliegenden Erfindung ist der Batterieschutzschalter 200 mit einer Batterieüberwachung ausgestattet. Ein Batterie-Management System ist heute bereits veilfach in Fahrzeugen der Oberklasse installiert. Ein solches Batterie-Management-System überwacht wichtige Batterie-Kenngrößen wie Spannung, Temperatur, gespeicherte Energie. Basierend auf diesen Daten kann ein sicherer Start des Motors auch bei längeren Stillstandszeiten gewährleistet werden. Zu diesem Zweck wird die Spannung der Batterie, die Temperatur der Batterie und der der Batterie entnommene bzw. in die Batterie fließende Strom I_{Batt} erfasst. Aus dem in die Batterie und aus der Batterie fließenden Strom wird eine Strombilanz erstellt. Basierend auf den erfassten Werten wird mit Hilfe geeigneter Rechenmodelle der Batteriezustand SOC (State Of Charge) und SOH (State Of Health) berechnet.

Eine solche Batterieüberwachung ist als zusätzliche Komponente 230 in den erfindungsgemäßen elektronischen Batterieschutzschalter 200 integriert. Zu diesem Zweck werden entsprechende Messeinrichtungen für die Batteriespannung, die Batterietemperatur und die Messung eines bidirektionalen Stroms in einem weiten Messbereich (zwischen einem und 1000 Ampere) vorgesehen. Die Strommessung erfolgt vorzugsweise mit Hilfe präziser Mess-Shunts (R_{Shunt1}). Der Mess-Shunt erzeugt eine stromproportionale Messspannung. Diese Funktionen können über einen ASIC in einfacher Weise in den erfindungsgemäßen elektronischen Batterieschutzschalter integriert werden.

Vorzugsweise ermöglicht der erfindungsgemäße Batterieschutzschalter 200 außerdem eine Überwachung der Ruhestromaufnahme des Kraftfahrzeug-Bordnetzes, die als Komponente 240 in den Batterieschutzschalter integriert ist. Zur Messung des Ruhestroms aus der Batterie in das Bordnetz, d.h. des Stroms in der Stellung Zündung AUS, kann jedoch nicht die Strommessung über den Widerstand R_{Shunt1} verwendet werden. Um die Stromentnahme aus der Batterie, d.h. den Strom I_{Ruhe} zu messen, dient ein weiterer Mess-Shunt R_{Shunt2}. Über diesen Ruhestrom-Mess-Shunt kann bei abgestelltem Fahrzeug, also bei der Stellung Zündung AUS, der Ruhestrom permanent überwacht und bilanziert werden.

Der Ruhestrom umfasst die Ströme, die zu allen Verbrauchern 160 fließen, die auch bei der Stellung Zündung AUS mit der Batterie verbunden sind. Insbesondere sind im Allgemeinen permanent mit der Batterie Verbraucher wie eine elektrische Zusatzheizung, ein elektrisches Glühsystem, eine Heckscheibenheizung, eine Sitzheizung, ein Gebläseregler für die Motorkühlung und ein Innenraum-Gebläse, eine Funkschließanlage, Uhren, ein Fahrzeugunterhaltungs- und Informationssystem usw. verbunden. Diese Verbraucher können auch bei ausgeschalteter Zündung ein Entleeren der Batterie bewirken und damit einen Wiederstart des Fahrzeugs verhindern.

Der Strom I_{Ruhe} wird permanent gemessen, um auch kurzzeitige Stromspitzen zu erkennen. Der gemessene Strom wird zeitlich gemittelt, um die mittlere Stromaufnahme bestimmen zu können. Auf diese Weise kann nicht nur ein kurzzeitig unzulässig hoher Strom erkannt, sondern auch eine erhöhte mittlere Ruhestromaufnahme detektiert werden. Eine erhöhte Ruhestromaufnahme kann beispielsweise durch ein häufiges Einschalten einzelner Systeme bewirkt werden, die auch in der Stellung Zündung AUS aktiv sind.

Ein Verbraucher, der permanent mit der Batterie verbunden ist, ist beispielsweise die Funk-Schließanlage. Eine typische Anforderung für ein permanent mit dem Kraftfahrzeug verbundenes System ist im Allgemeinen, dass die mittlere Stromaufnahme einen Wert von 100 µA nicht überschreitet. Dies lässt sich bei Systemen mit einem im aktiven Zustand höheren Stromverbrauch dadurch erreichen, dass die Stromaufnahme durch Versetzen in einen speziellen Ruhe-Betriebszustand verringert wird. Beispielsweise kann die Stromaufnahme einer Funk-Schließanlage auf einen Wert von nur 50 µA reduziert werden, indem nur der Funkempfänger selbst aktiv ist, alle anderen Komponenten einer Funk-Schließanlage jedoch deaktiviert sind. In einem Betriebszustand mit etwas erhöhter Aktivität werden auch weitere Schaltungsteile der Funk-Schließanlage aktiviert und die Stromaufnahme steigt dementsprechend deutlich an, beispielsweise auf 50 mA. Der Übergang in einen solchen Betriebszustand mit erhöhter Stromaufnahme ist unter anderem erforderlich, um empfangene Daten auszuwerten und zu entscheiden, ob ein autorisierter Code empfangen wurde. Solange die zeitliche Aktivierung des Betriebszustandes mit erhöhter Stromaufnahme selten ist, die Verweildauern in beiden Betriebszuständen beispielsweise ein Verhältnis von 1000:1 aufweisen, liegt die mittlere Stromaufnahme unter dem Wert von 100 µA.

Durch äußere Störungen, beispielsweise Störsignale von Leuchtstofflampen oder die Sendesignale anderer Funkschließanlagen in einem Parkhaus, wird die Funkschließanlage des Fahrzeugs sehr viel häufiger als dem obigen Verhältnis entsprechend in den Betriebszustand mit einer höheren Stromaufnahme versetzt. Damit steigt die mittlere Stromaufnahme auf einen Wert, der deutlich über dem Grenzwert von 100 µA liegt.

Um eine unzulässige Entleerung der Batterie sicherzustellen, kann von der Steuereinheit eine entsprechende Abschaltung bestimmter Systeme initiiert werden.

Die Abschaltung wird gemäß einer ersten bevorzugten Ausführungsform mit Hilfe des Kraftfahrzeug-Datenbusses bewirkt. Steuergeräte und Komponenten, die an den Datenbus im Kraftfahrzeug angeschlossen sind, können über einen von der Steuereinrichtung 220 des Batterieschutzschalters 200 ausgesandten Befehl vollständig (oder teilweise) deaktiviert werden. Eine auf diese Weise stillgelegte Funkschließanlage kann zwar nicht mehr zur Öffnung der Fahrzeugschließanlage aus der Ferne dienen. Da ein Entleeren der Batterie über die Funkschließanlage während der Standzeit des Fahrzeugs erfindungsgemäß jedoch verhindert werden konnte, kann das Fahrzeug mit dem Schlüssel mechanisch geöffnet und auch wieder aus eigener Kraft gestartet werden.

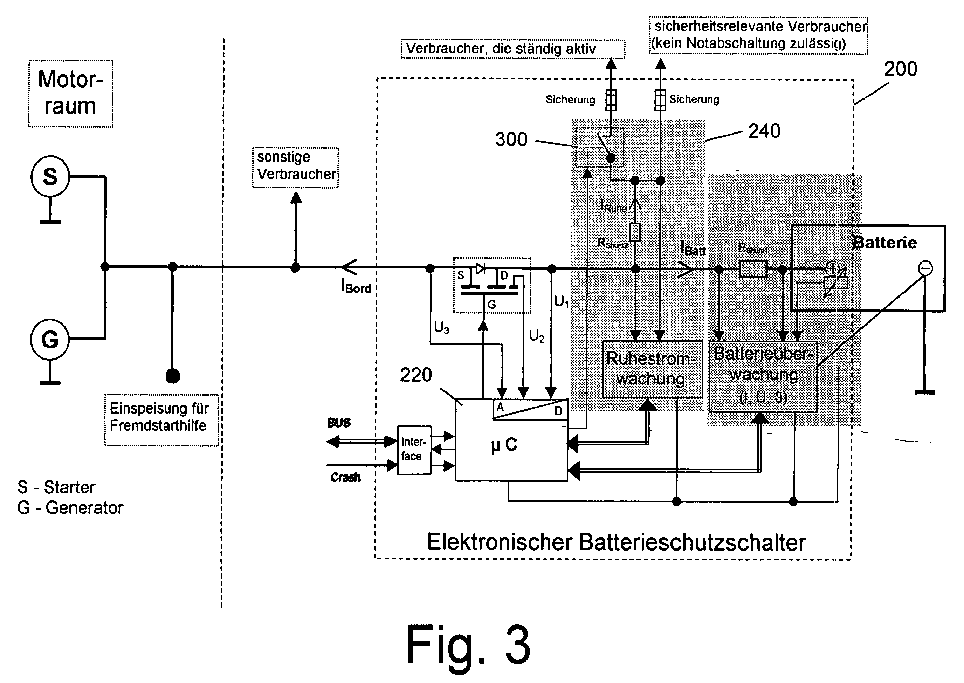

Gemäß einer alternativen Ausführungsform ist in dem Batterieschutzschalter der vorliegenden Erfindung ein weiterer Schalter vorgesehen. Der Aufbau dieser modifizierten Ausführungsform ist in Fig. 3 wiedergegeben. Zu diesem Zweck sind die ständig mit dem Bordnetz verbundenen Verbraucher in zwei Kategorien unterteilt, und zwar in Abhängigkeit davon, ob aus Sicherheitsgründen eine Abschaltung zulässig ist oder nicht.

Die Verbraucher, bei denen eine Abschaltung zulässig ist, sind über einen in dem Batterieschutzschalter 200, insbesondere in der Überwachungseinrichtung 240 angeordneten Schalter 300 mit dem Bordnetz verbunden. Sobald die Steuereinrichtung 220 feststellt, dass der aus der Batterie fließende Ruhestrom einen vorgegebenen Grenzwert überschreitet, wird der Schalter 300 geöffnet, um den unzulässig hohen Stromfluß zu unterbrechen und ein Entleeren der Batterie zu verhindern. Diese Abschaltung erfolgt zwar auf Kosten der Funktionalität des Kraftfahrzeugs, kann aber dadurch größeren Schaden vom Benutzer abwenden, insbesondere die Kosten und den Zeitaufwand für einen Pannendienst einsparen.

Das Kraftfahrzeugbordnetz 110 ist prinzipiell als Parallelschaltung der Spannungsquellen, d.h. der Batterie 100 und des Generators 120, und der Verbraucher ausgelegt. Alle Verbraucher sind entweder direkt oder indirekt mit Plus-Potential, als direktem Kontakt zum Plus-Pol der Batterie und mit Masse verbunden. Das permanente Plus-Potential in dem Kraftfahrzeugbordnetz wird als "Klemme-30" bezeichnet. Demgegenüber liegen alle an "Klemme-15" angeschlossenen Verbraucher nur dann auf Plus-Potential, wenn die Zündung eingeschaltet ist und der "Klemme-15-Schalter" eine Verbindung zu dem permanent auf Klemme-30 anliegenden Plus-Potential herstellt.

Aufgrund der unbegrenzt Anzahl möglicher Schaltzyklen des Halbleiterschalter 210 wird die Funktion des "Klemme-15-Schalters" erfindungsgemäß ebenfalls auf den Halbleiterschalter 210 übertragen. Der Halbleiterschalter kann zuverlässig Ruheströme schalten, kurzzeitig bis zu 1000 A und von einigen 100 A im Dauerbetrieb.

Damit lassen sich auch zusätzliche Verbraucher mit hohen Ruheströmen zuverlässig vom Kraftfahrzeugbordnetz trennen, die herkömmlich permanent mit Plus-Potential verbunden sind. Auch wenn diese Verbraucher herkömmlich so angesteuert werden, dass sie bei abgestelltem Fahrzeug deaktiviert sind, kann dennoch ein hoher Ruhestrom fließen, insbesondere bei einer auftretenden Fehlfunktion. Beispielsweise kann ein Leistungshalbleiterbauelement in einem permanent angeschlossenen Verbraucher fehlerhaft einen Dauerbetrieb bewirken. Durch die erfindungsgemäße Verwendung eines Halbleiterschalters in einem Batterieschutzschalter, dem gleichzeitig die Funktion des Klemme-15-Schalters zugeordnet ist, kann ein solcher unzulässig hoher Ruhestrom und eine dementsprechende Batterieentladung einfach und sicher verhindert werden.

Über die Verwendung des Batterieschutzschalters als Trennschalter in der Stellung Zündung AUS können daher bei abgestelltem Fahrzeug mehr Verbraucher als herkömmlich von der Versorgungsspannung getrennt und damit eine unnötige und fehlerhafte Stromaufnahme bei stehendem Fahrzeug vermieden werden.

Der elektronische Batterieschutzschalter der vorliegenden Erfindung wird vorzugsweise sehr nahe an der Batterie eingebaut. Damit lässt sich die ungeschützte Leitung zwischen der Batterie und dem Batterieschutzschalter so kurz wie möglich halten. Zu diesem Zweck wird der Batterieschutzschalter 200 vorzugsweise in einem Modul realisiert, das an oder auf der Batterie befestigt ist und direkt die Plus-Polklemme der Batterie umfasst. Bei einer solchen Realisierung liegt keine ungeschützte Leitung zwischen der Batterie und dem Batterieschutzschalter.

Zusammenfassend betrifft die Erfindung einen elektronischen Batterieschutzschalter, der eine sichere und reversible Trennung des Kraftfahrzeugbordnetzes von der Batterie ermöglicht. Zu diesem Zweck wird ein elektronischer Halbleiterschalter verwendet, der eine unbegrenzte Anzahl von Schaltzyklen ermöglicht. Der Halbleiterschalter trennt die elektrische Verbindung des Kraftfahrzeugbordnetzes und der Batterie bei Vorliegen eines Crash-Signals, eines Überstrom-Signals oder dem Ausschalten der Zündung. Bei abgestelltem Fahrzeug kann dann sicher ein unzulässig hoher Ruhestrom und eine Entladung der Batterie effektiv und in einfacher Weise verhindert werden.

## Patentansprüche

1. Batterieschutzschalter zur Trennung einer elektrischen Verbindung zwischen der Batterie (100) eines Kraftfahrzeugs und einem Kraftfahrzeugbordnetz (110) mit einen Halbleiterschalter (210) zur Verbindung und Trennung der Batterie (100) und des Kraftfahrzeugbordnetzes (110) in Abhängigkeit von einem Überstrom und/oder einem Crash-Signal
**dadurch gekennzeichnet, dass**
der Halbleiterschalter (210) für einen bidirektionalen Betrieb des Stroms ausgelegt ist, und
der Halbleiterschalter (210) leitend geschaltet wird, wenn die Spannung (U₃) des Bordnetzes (110) größer als die Batteriespannung (U₁) ist.

2. Batterieschutzschalter nach Anspruch 1, wobei der Halbleiterschalter (210) ein MOSFET ist.

3. Batterieschutzschalter nach Anspruch 1 oder 2, wobei der Halbleiterschalter (210) das Kraftfahrzeugbordnetz (110) außerdem in der Stellung Zündung AUS von der Batterie (100) trennt.

4. Batterieschutzschalter nach Anspruch 3, wobei der Halbleiterschalter (210) elektrische Verbraucher mit einem hohen Ruhestromverbrauch, insbesondere elektrische Zusatzheizungen und/oder Glühsysteme, von der Batterie (100) in der Stellung Zündung AUS von der Batterie (100) trennt.

5. Batterieschutzschalter nach einem der Ansprüche 1 bis 4, wobei der Halbleiterschalter (210) mit einer Strommessfunktion zur Überwachung des aus der Batterie (100) in das Kraftfahrzeugbordnetz (110) fließenden Stroms (I_{Board}) ausgestattet ist.

6. Batterieschutzschalter nach Anspruch 5, der außerdem eine Steuereinrichtung (220) zur Auswertung des von dem Halbleiterschalter (210) gemessenen Stroms und zur Ansteuerung des Halbleiterschalters (210) zur Trennung der elektrischen Verbindung zwischen der Batterie (100) und dem Kraftfahrzeugbordnetz (110) umfasst.

7. Batterieschutzschalter nach Anspruch 6, wobei die Steuereinrichtung (220) den vom Halbleiterschalter (210) gemessenen Strom mit einem vorgegebenen Grenzwert vergleicht.

8. Batterieschutzschalter nach Anspruch 7, wobei der Grenzwert adaptiv einstellbar ist.

9. Batterieschutzschalter nach Anspruch 7 oder 8, wobei die Steuereinrichtung (220) dem Halbleiterschalter (210) einen Überstrom bei Überschreitung des Grenzwertes signalisiert.

10. Batterieschutzschalter nach einem der Ansprüche 1 bis 9, wobei das Crash-Signal ein Airbag-Auslösesignal ist.

11. Batterieschutzschalter nach einem der Ansprüche 1 bis 10, der zur Befestigung an einem Batteriepol ausgelegt ist.

12. Batterieschutzschalter nach einem der Ansprüche 1 bis 11, mit einer Batterieüberwachung (230).

13. Batterieschutzschalter nach Anspruch 12, wobei die Batterieüberwachung (230) die Spannung der Batterie (100), die Temperatur der Batterie (100) und den in oder aus der Batterie (100) fließenden Strom überwacht.

14. Batterieschutzschalter nach Anspruch 12 oder 13, wobei die Steuereinrichtung (220) aus den von der Batterieüberwachung (230) gemessenen Werten den Batteriezustand (SOC, SOH) ermittelt.

15. Batterieschutzschalter nach einem der Ansprüche 1 bis 14, mit einer Überwachungseinrichtung (240) zur Überwachung des aus der Batterie (100) fließenden Stroms in der Stellung Zündung AUS.

16. Batterieschutzschalter nach Anspruch 15, wobei die Steuereinrichtung (220) die von der Überwachungseinrichtung (240) erfassten Stromwerte mittelt und bei Überschreitung eines vorgegebenen Grenzwertes auch die in der Stellung Zündung AUS angeschlossenen Verbraucher (160) von der Batterie trennt.

## Claims

1. A battery safety switch for disconnecting an electrical connection between the battery (100) of a motor vehicle and a motor vehicle on-board network (110), said battery safety switch including a solid-state switch (210) for the connection and disconnection of the battery (100) and the motor vehicle on-board network (210) in dependence of an overcurrent and / or a crash signal
**characterised in that**
the solid-state switch (210) is designed for bi-directional operation of the current, and
the solid-state switch (210) is switched conducting when the voltage (U₃) of the on-board network (110) is greater than the battery voltage (U₁).

2. A battery safety switch according to Claim 1, wherein the solid-state switch (210) is a MOSFET.

3. A battery safety switch according to Claim 1 or 2, wherein the solid-state switch (210) disconnects the motor vehicle on-board network (110) from the battery (100) also in the position Ignition OFF.

4. A battery safety switch according to Claim 3, wherein the solid-state switch (210) disconnects electrical loads with a high idle current consumption, in particular electrical supplementary heaters and / or glow systems, from the battery (100) in the position Ignition OFF.

5. A battery safety switch according to one of the Claims 1 to 4, wherein the solid-state switch (210) is equipped with a current measurement function for monitoring the current (I_{Onboard}) flowing out of the battery (100) into the motor vehicle on-board network (110).

6. A battery safety switch according to Claim 5, which also comprises a control unit (220) for the evaluation of the current measured by the solid-state switch (210) and for the control of the solid-state switch (210) for the disconnection of the electrical connection between the battery (100) and the motor vehicle on-board network (110).

7. A battery safety switch according to Claim 6, wherein the control unit (220) compares the current measured by the solid-state switch (210) with a specified limit.

8. A battery safety switch according to Claim 7, wherein the limit can be adjusted adaptively.

9. A battery safety switch according to Claim 7 or 8, wherein the control unit (220) signals an overcurrent to the solid-state switch (210) when the limit is exceeded.

10. A battery safety switch according to one of the Claims 1 to 9, wherein the crash signal is an air bag trigger signal.

11. A battery safety switch according to one of the Claims 1 to 10 which is designed for attachment to a battery terminal.

12. A battery safety switch according to one of the Claims 1 to 11 with a battery monitoring system (230).

13. A battery safety switch according to Claim 12, wherein the battery monitoring system (230) monitors the voltage of the battery (100), the temperature of the battery (100) and the current flowing into or out of the battery (100).

14. A battery safety switch according to Claim 12 or 13, wherein the control unit (220) determines the battery condition (SOC, SOH) from the values measured by the battery monitoring system (230).

15. A battery safety switch according to one of the Claims 1 to 14 with a monitoring device (240) for monitoring the current flow out of the battery (100) in the position Ignition OFF.

16. A battery safety switch according to Claim 15, wherein the control unit (220) averages the current values acquired by the monitoring device (240) and on exceeding a specified limit also disconnects the loads (160) connected in the position Ignition OFF from the battery.

## Revendications

1. Coupe-circuit pour batterie destiné à couper une liaison électrique entre la batterie (100) d'un véhicule automobile et un réseau de bord (110) du véhicule, comportant un commutateur à semi-conducteurs (210) pour établir ou couper la liaison entre la batterie (100) et le réseau de bord (110) du véhicule en fonction d'une surintensité de courant et/ou d'un signal de collision,
**caractérisé en ce que**
le commutateur à semi-conducteurs (210) est conçu pour un fonctionnement bidirectionnel du courant,
le commutateur à semi-conducteurs (210) établit la liaison conductrice lorsque la tension (U₃) du réseau de bord (110) est supérieure à la tension (U₁) de la batterie.

2. Coupe-circuit pour batterie selon la revendication 1, dans lequel le commutateur à semi-conducteurs (210) est un MOSFET.

3. Coupe-circuit pour batterie selon la revendication 1 ou 2, dans lequel en outre, dans la position Allumage coupé, le commutateur à semi-conducteurs (210) coupe la liaison entre le réseau de bord (110) du véhicule et la batterie (100).

4. Coupe-circuit pour batterie selon la revendication 3, dans lequel le commutateur à semi-conducteurs (210), dans la position Allumage coupé, coupe la liaison entre des consommateurs électriques avec une consommation élevée de courant de repos, en particulier des chauffages électriques additionnels et/ou des systèmes de préchauffage, et la batterie (100).

5. Coupe-circuit pour batterie selon l'une des revendications 1 à 4, dans lequel le commutateur à semi-conducteurs (210) est équipé d'une fonction de mesure du courant pour surveiller le courant (I_{bord}) circulant hors de la batterie (100) dans le réseau de bord (110) du véhicule.

6. Coupe-circuit pour batterie selon la revendication 5, qui comporte en outre un dispositif de commande (220) pour évaluer le courant mesuré par le commutateur à semi-conducteurs (210) et pour activer le commutateur à semi-conducteurs (210) en vue de couper la liaison électrique entre la batterie (100) et le réseau de bord (110) du véhicule.

7. Coupe-circuit pour batterie selon la revendication 6, dans lequel le dispositif de commande (220) compare le courant mesuré par le commutateur à semi-conducteurs (210) avec une valeur limite prédéfinie.

8. Coupe-circuit pour batterie selon la revendication 7, dans lequel la valeur limite peut être réglée par ajustage automatique.

9. Coupe-circuit pour batterie selon la revendication 7 ou 8, dans lequel le dispositif de commande (220) signale au commutateur à semi-conducteurs (210) une surintensité de courant en cas de dépassement de la valeur limite.

10. Coupe-circuit pour batterie selon l'une des revendications 1 à 9, dans lequel le signal de collision est un signal de déclenchement d'airbag.

11. Coupe-circuit pour batterie selon l'une des revendications 1 à 10, qui est conçu pour être fixé à un pôle de la batterie.

12. Coupe-circuit pour batterie selon l'une quelconque des revendications 1 à 11, avec un système de surveillance de batterie (230).

13. Coupe-circuit pour batterie selon la revendication 12, dans lequel le système de surveillance de batterie (230) surveille la tension de la batterie (100), la température de la batterie (100) et le courant circulant dans ou à l'extérieur de la batterie (100).

14. Coupe-circuit pour batterie selon la revendication 12 ou 13, dans lequel le dispositif de commande (220) détermine, à partir des valeurs mesurées par le système de surveillance de la batterie (230), l'état de la batterie (SOC, SOH).

15. Coupe-circuit pour batterie selon l'une des revendications 1 à 14, avec un dispositif de surveillance (240) destiné à surveiller le courant sortant de la batterie (100) dans la position Allumage coupé.

16. Coupe-circuit pour batterie selon la revendication 15, dans lequel le dispositif de commande (220) calcule la moyenne des valeurs de courant enregistrées par le dispositif de surveillance (240) et, en cas de dépassement d'une valeur limite prédéfinie, sépare de la batterie (100) également les composants (160) raccordés dans la position Allumage coupé.
